Europäisches Patentamt

European Patent Office

Office européen des brevets

(11) Publication number: **0 571 672 A1**

## EUROPEAN PATENT APPLICATION

(21) Application number: **92304714.6**

(22) Date of filing: **26.05.92**

(51) Int. Cl.5: **C09D 11/18**

(43) Date of publication of application:
**01.12.93 Bulletin 93/48**

(84) Designated Contracting States:
**AT BE CH DE DK ES FR GB GR IT LI LU MC NL PT SE**

(71) Applicant: **KEDAH LIMITED**
**20 Upper Merrion Street**
**Dublin 2(IE)**

(72) Inventor: **Clewer, Harold Grenville**
**22 Aspin Park Crescent**
**Knaresborough, Harrogate H95 8EZ(GB)**

(74) Representative: **Houghton, David et al**
**Hulse & Co.**
**Eagle Star House,**
**Carver Street**
**Sheffield S1 4FP (GB)**

(54) Compositions for making inks.

(57) A method of producing a powder intermediary for use in the production of inks comprising melting a required quantity of resin material in a suitable receptacle, heating the molten resin to a temperature to reduce its viscosity to allow the mixing of additives, adding at least one dye and allowing the resultant solution to cool and solidify, and crushing the resultant solid to fine particulate form. To provide effective shelf life to the particulate material, at least one reactive oil should be added to the molten resin. The invention also embodies an ink when made from the particulate intermediary and where the particulate intermediary is added to a solvent.

FIGURE 1

EP 0 571 672 A1

Rank Xerox (UK) Business Services
(3.10/3.6/3.3.1)

This invention relates to inks, and is particularly concerned with inks for ball point pens.

Hitherto inks for ball point pens have been produced by first depositing a required volume of solvent in a suitable receptacle, such as a kettle, and then dissolving in the solvent an appropriate quantity of resin, it normally being preferred to add one or more resins to the cold solvent whilst stirring, and heating the solvent to a temperature, e.g. up to 80°C to 90°C to soften and dissolve the added resin, stirring being continued until the added resin has dissolved completely. At this stage the solution is checked and the viscosity modified if necessary by further stirring and/or further additions of solvent and/or resin. The solution is then allowed to cool to below 60°C and an appropriate quantity of reactive oil added, to assist the subsequent bringing into solution of dye bases, together with appropriate quantities of other required additives such as shelf life promoters. With the temperature of the solution held below a maxiumum of 65°C, above which there can be an adverse effect on dyes, appropriate quantities of dye or a combination of dyes are added, and the resultant solution continuously stirred for a considerable period of up to three days to ensure that all reactions are complete. Colour and viscosity checks are then made and any required modification made, and finally any other required additive e.g. a thixotropic agent, introduced, followed by a final viscosity check. It has long been understood that considerable care has to be exercised over the weights used for the various additions to the given volume of solvent, mainly to ensure that the required viscosity is achieved and to ensure a correct colour balance of the dyes used. Despite the care that is exercised, it has been found that the dyes have left unreacted traces in the solution, and, accordingly, it is the universal practice to filter the final solution, usually in a centrifuge, to remove any unreacted solids.

It will be recognised that the process is slow and relatively costly, and requires considerable care and skill being exercised by the operatives. A further disadvantage is that with the ink being produced in liquid form, there are the problems and high cost of providing adequate storage at the point of manufacture, and in delivering the ink to a pen manufacturer, who also has the problems of storage.

The object of the present invention is to provide a method of producing inks, particularly inks for ball point pens which avoids the problems referred to above, the invention also embracing a powder intermediary formed during the process.

According to the present invention, a method of producing ink, particularly ink for ball point pens, comprises melting a required quantity of resin material in a suitable receptacle, heating the molten resin to a temperature to reduce its viscosity to allow the mixing in of additives, adding to the molten resin at least one reactive oil, and at least one dye, allowing the resultant solution to cool and solidify, crushing the resultant solid to fine particulate form, and adding a required quantity of the particulate material to a given quantity of solvent. Preferably at least one thixotropic agent, and possibly a shelf-life promoter, is also included.

Inevitably, the resin must be heated to a temperature in excess of 65°C, before its viscosity is reduced to a level that allows the effective mixing in of the other components, and in a most surprising manner, it was found that there was no breakdown or other advers effect on the dyes. Equally surprising was the finding that the particulate material was completely soluble in the solvent and the avoidance of the need to filter such as in a centrifuge, thereby allowing the production of an ink, more quickly and at less cost than has been possible hitherto.

According to a further feature of the invention, a method of producing a powder intermediary for use in the production of inks, comprises melting a required quantity of resin material in a suitable receptacle, heating the molten resin to a temperature to reduce its viscosity to allow the mixing in of additives, adding to the molten resin at least one reactive oil, and at least one dye, allowing the resultant solution to cool and solidify, and crushing the resultant solid to fine particulate form. Preferably, a thixotropic agent and possibly a shelf-life promoter are also added. According to a still further feature of the invention, a powder intermediary for use in the production of inks comprises the solid product of the reaction of resin, reactive oil, and dye or dyes. Preferably, the powder intermediary also includes a thixotropic agent and possibly a shelf-life promoter.

It will be seen immediately from the above, that at the point where the powder intermediary has been produced, there is no need for it to be added immediately to a solvent. Thus, an ink manufacturer can produce the powder imtermediary for stock, and store it with considerably greater ease and at less cost than is possible with liquid ink. It may also be possible to store the solid product of reaction and reduce it to powder form as and when a quantity of ink is required to be produced. Equally importantly, it is possible for the powder intermediary or the solid product of the reaction to be produced and supplied as such to a pen producer, and the costs and problems of transporting powder are considerably less than those of transporting liquids. More than that, a pen manufacturer can obtain the powder intermediary and hold it in stock far more conveniently than holding stocks of liquid ink. The pen manufacturer then merely has to provide himself with a means of mixing the powder intermediary with solvent, and possibly a means of grinding the solid product to powder, to produce the correct amount of liquid ink to meet his needs.

With the invention, it is preferred to add to 100 parts by weight solvent, 97 to 109 parts by weight powder intermediary, and the powder intermediary may comprise (wt. percent) 10-80 resin, 8 to 20 reactive oil, 8 to 60 dyes, and 0.4 to 1.5 thixotropic agent and 2 to 6 shelf-life promoter, when present.

Preferably the solvent is a high boiling point solvent such as an alcohol, a glycol or a glycol ether, with appropriate plasticisers. Thus, it may be benzyl alcohol, ethylene glycol monophenyl ether, or dimethyl phthalate. The resin may be a styrene allyl alcohol copolymer resin, being hard non tacky with a softening point of 95-105°C with a low acid value or an alkyd or polyester resin with a softening point of 90°C. The acid value being 80, assists in the solution of the colour bases (dyes) and can replace part of the fatty acids or reactive oils. Preferably the reactive oil is a fatty acid such as oleic acid. When used, the thixotropic agent is preferably polyvinyl pyrrolidone and the shelf life promoter N, N, N$^1$, N$^1$, - tetrakis (2 hydroxypropyl) ethylene diamine. As to the dye bases, these can be any of those with high solubility and stability in solvents, such as Victoria blue, rhodamine, methyl violet or chrysoidine.

In a conventional method of making a ball pen ink, a mixer is heated to 80-90°C, solvents are added to the mixer, and allowed to reach equilibrium temperature, after which resins are added to the solvents at a steady controlled rate. If too much resin is added to the solvent mixture, lumps may form which will not dissolve even on prolonged mixing. Once the resin has dissolved completely, its viscosity is checked and if necessary adjusted by the addition of more resin where the viscosity is too low or more solvent where the viscosity is too high. The viscosity can vary from about 18000 centipoise to 24000 centipoise. After the resins have been mixed, they are cooled to 60°C and an appropriate weight of a plasticising oil is added whilst stirring continuously. The oil is normally based on a fatty acid and is added both to extend the resin and to increas the solubility of the dye. An appropriate weight of one or more dyes is added to the resin solution which is maintained at not more than 65°C to prevent degradation of the dye or dyes. Stirring is continued to ensure that the dyes dissolve completely and to give the correct colour development, and this stage can take up to three days. At the end of the dye dissolving step, the viscosity is checked and the modifications are made as required. Other materials may be added, for example thixotropic agents to provide the required final flow properties and then a final viscosity check is carried out.

Accurate weighing of the various additives to a prepared volume of solvent is essential if the correct viscosity is to be achieved and the correct colour given. Very often, however, it is found that the solution contains traces of undissolved dye even if great care has been taken during the addition of the dye and an extended mixing time has been used. Usually, therefore, the final solution is filtered to remove traces of unreacted solids which can cause serious problems both during shipping of the ink and in terms of the writing properties of the final ball point pen. Unreacted solids can even occasionally block the passage through which the ink flows to the writing ball at the point of the nib. The process of making the ink is therefore long and expensive both because of the labour involved and because of the time required. The process needs both care and skill. The ink is in liquid form which gives rise to problems in storage at the manufacturing stage, gives rise to transport problems, and gives rise to storage problems at the premises of the pen manufacturer.

The present invention provides a coloured composition for use in the manfacture of a ball pen ink comprising a dye which is dissolved or dispersed in a resin or mixture of resins, the composition being a solid form.

The dye in the above composition is preferably solvent soluble. The composition may be manufactured by dissolving at least one solvent soluble dye in a resin or mixture of resins maintained at a temperature above 70°C for a relatively short period which permits the dye to dissolve in the resin without adversely affecting its colour and stability. The resulting composition may then be allowed to cool and solidify and to be converted into a finely divided form.

Thus solid compositions according to the invention may be provided in the form of granules for micronising or milling by the ink manufacturer, or they may be micronised or milled before shipment to the ink manufacturer and supplied to him already in the form of a finely divided powder. Such powder is preferably supplied packed in a hermetically sealed container, e.g. of metal, plastics or metallised plastics to prevent air ingress to the powder which promotes aggregation thereof.

The invention further provides a method for making an ink composition for use in a ball pen which comprises dissolving in a solvent or mixture of solvents a coloured composition comprising a solvent soluble dye dissolved in a resin or mixture of resins. In a yet further aspect the invention provides a method of making a ball pen including the step of filling the pen with an ink made as described above.

When compared with conventional ink supplied in liquid form, the finely divided solid composition which is provided in one form of the invention has a number of significant advantages. It provides a facility for the end user to transform the coloured composition which is or is readily converted into a powder into a required ball pen ink by simple addition of a solvent. The manufacturer can obtain a specific viscosity appropriate to local conditions, e.g. of temperature by simply selecting an appropriate quantity of solvent to be added. The present composition facilitates the production by the ink manufacturer of ink of a consistent quality. When supplied in powder or other solid form the compositon provides a base material for making ink that is durable and safe compared with a liquid ink, particularly because an organic solvent is not present. The shelf life of the coloured composition is relatively long, and transport costs are reduced because the compositon is not classifed for the purposes of shipping as a dangerous material and has a higher ratio of useful weight to volume. The powdered composition and the resulting ink may be provided in conventional colours, for example blue, black, red and green.

It has been found that by appropriate selection of the resins, and the heating time and temperatures, the dye will dissolve in the resin or resin mixtures without leaving sufficient solid residue to require its removal by filtration before further processing into an ink. It has been found that the ink of the invention is effective in a ball pen over a relatively wide viscosity range compared to a conventional ball pen and it is believed that the low solid residue contributes to usefulness over this wide range. Thus a ball pen filled with ink according to the invention has proved satisfactory when the ink has a viscosity as low as 50-60 poise and as high as 800 poise, whereas the practical viscosity range for a conventional ink is 160 to 200 poise, all measured at 21°C.

Any dye may be used that is compatible with the resin system selected and with the solvent with which the compositon is to be diluted to make a ball pen ink. Suitable dyes include solvent soluble dyes (i.e. dyes that are soluble in ball point ink solvents) that are converted in the presence of acids or acidic resins into chromophoric systems having their full colour strengths. The dyes used are selected on the basis that they are fairly pure, for example, that they contain less than 0.5% of matter insoluble in the intended final solvents for the ball pen ink, and that they are fully soluble in the resins used. Examples of such dyes are given below.

The dyes may be present in an amount of 10-40% by weight based on the weight of resin. For economy of dye use the amount of dye may be 10-20% of the weight of the resin, and where it is important to maximise the depth of colour the amount may be 25-40% by weight of the resin.

Preferably a mixture of resins or polymers is used having a neutral resin containing polar groups, for example hydroxyl groups, and having from 33 to 66% by weight of the neutral resin of a resin containing acidic groups. In most cases the neutral resin is the major component and the acidic resin is the minor component.

The neutral polymer may be a relatively low molecular weight copolymer having a majority of alkyl, aryl or aralkyl units and a minor proportion of units containing one or more hydroxyl groups. Thus the neutral polymer may be a copolymer of styrene and allyl alcohol containing typically styrene units and allyl alcohol units in a ratio of about 2:1, the polymer having a molecular weight in the range 1200-1600 and solubility in alcohols, esters and ketones. It may have a softening point in the range of 95 to 100°C.

The neutral resin described above may be admixed with an acidic resin with a maximum colour value of 7 (DIN 6162), having an acid value of 10-100, typically about 80 and having a softening point of 90-95°C such resins typically being of the alkyd or polyester types, being soluble in alcohols and esters and compatible with nitrocellulose and shellac. The use of a resin of acid value about 80 assists the dye to dissolve and enhances its colour and assists favourable writing properties of the final ink. It also permits the resin to be at least partly replaced by pasticising oils of the fatty acid type.

The resin composition may further comprise 1 to 10% by weight of one or more flow-assisting resins that do not affect the final colour, e.g. a resin containing basic groups, for example polyvinyl pyrrolidone, with a molecular weight of at least 200,000 and 95% active content and no more than 1% unsaturation. Flow levelling agents, e.g. 12-hydroxystearamide may be incorporated into the composition or a modified silicate may be incorporated such as those sold under the trade name Cab-O-Sil .

As explained above, the resin mixture can be plasticised and extended by incorporation of one or more plasticising oils of the fatty acid type. The oils used are typically present in an amount of 10-40% by weight and are usually fatty acids with low levels of linoleic acid and linolenic acid (to help stability), decanoic acid, ricinoleic acid and other $C_4$-$C_{20}$ organic acids which may be straight or branched chain, are preferably saturated, and may be obtained either from natural or synthetic sources. The coloured composition may also comprise one or more anti-oxidants, for example butylated hydroxy toluene, dicresyl propane or another modified biphenyl, or a modified phenolic anti-oxidant.

The solid base material is manufactured by dissolving the dye or mixture of dyes in the resin mixture. The dye has been made soluble by being subjected to a high dissolving temperature for a short period of time, the resin being heated so that its viscosity falls sufficiently for the dye to be added in a continuous stream of finely divided powder. Thus temperatures of 75 to 115°C and typically 90 to 110°C can be used and the dissolving periods may be from 30 to 90 minutes, typically about 50 minutes. The use of temperatures above 70ºC to dissolve the dye or dye mixture has not yet previously been considered a practical possibility in the manufacture of ball pen inks because the long processing times involved have adversely affected the stability and colour of the dye.

Weighed proportions of the resin material are introduced into a mixer and heated until they soften, after which the dye or mixture of dyes is added in fine powder form as a continuous stream with continued stirring and avoiding agglomeration of the dye into lumps. The mix is removed from its vessel and is solidified into layers or lumps, or is formed into relatively large granules. The resulting lumps or granules may be further converted into micronised powder by milling, typically to a particle size of 100 to 500 microns. Because the dye dissolves completely, there is no need for a filtration step, and the eventual ink is both less expensive to produce and of superior technical performance. Where the coloured composition is provided in fine powder form, it is preferably air-tightly sealed in an aluminium walled plastics container or drum to minimise agglomeration during storage.

If desired, the coloured composition of the invention can simply be cooled without conversion into a finely divided state and dissolved in solvents to make the final ink. More usually, however, it is converted into a solid base material which is typically in the form of a powder consisting of or containing the resin, one or more dyes, plasticising oil and thixotropic agents, and stabilisers. The use of such a base material is advantageous because it can be stored and transported as such enabling the ink manufacturer to stock the powder rather than liquid ink. Depending on the requirements of a particular customer, the coloured composition may be provided in the form of granules or other relatively coarse particles which are micronised or milled by the ink manufacturer immediately prior to dissolving in solvent, or the coloured composition can be provided in ready micronised or milled form. The ball pen manufacturer simply needs a mixer with which to mix the solvent and powder to prepare the final ink and he can produce quantities of the liquid ink for filling into ball pens as and when he needs them.

Depending on the final viscosity required, 100 parts by weight of the coloured composition are added to 65-95 parts by weight of total solvent to give the desired ball pen ink. The solvents employed are of high boiling point and may be alcohols, glycols, glycol ethers and are typically benzyl alcohol, dimethyl phthalate, ethylene glycol monophenyl ether, or 1,3-butylene glycol monophenyl ether. Suitable solvents include 45% by volume of dimethyl phthalate, of 55% by volume of benzyl alcohol, 25% by volume dimethyl phthalate and 20% by volume of ethylene glycol monophenyl ether.

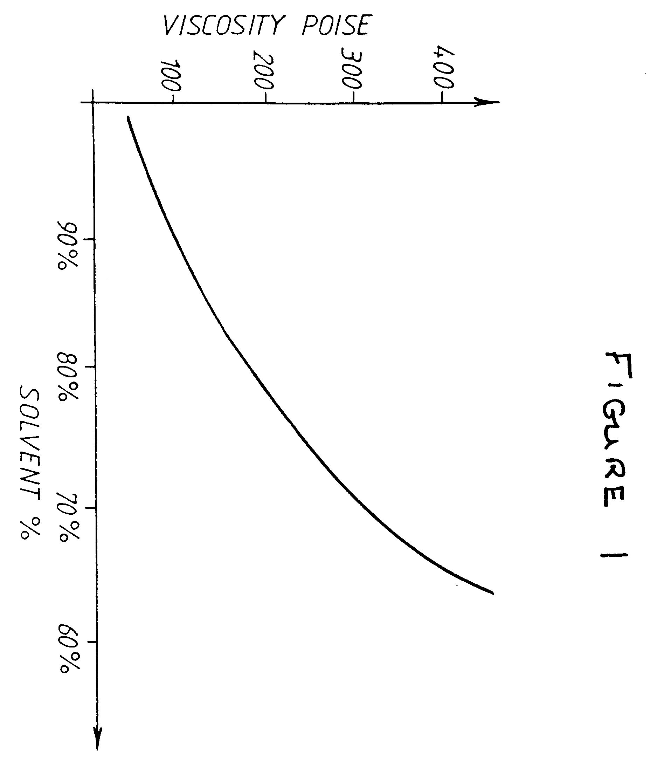

The actual viscosity of the ink depends on the ratio of solvent to powder, and a typical relationship is shown on the attached figure in which viscosity in poise measured on a Brookfield Viscometer is shown as ordinate and number of parts by weight of solvent per 100 parts by weight of powder is shown as the abscissa.

The invention will now be further described with reference to the following Examples:

EXAMPLE 1

A typical ink formulation is as follows:

|  | Parts w/w |
|---|---|
| BASE MATERIAL | |
| Styrene-allyl alcohol copolymer | 750 |
| Alkyd resin | 350 |
| Polyvinyl pyrrolidone | 10 |
| Solvent Blue 4 | 200 |
| Solvent Blue 64 | 150 |
| Solvent Violet 8 | 50 |
| Oleic acid | 200 |
| Solvent | |
| Benzyl alcohol | 690 |
| Dimethyl phthalate | 850 |

The above resins were charged into a mixer and heated with stirring to a temperature above 75°C until their viscosity had fallen sufficiently to allow the dye mixture to be added in powder form as a controlled stream, agitation being continuous during the dye addition. If the dyes are added too slowly, they are exposed to an elevated temperature for a period longer than desirable. Adding them too quickly gives rise to uneven mixing and bad dispersion with discrete lumps being formed. The temperature was therefore in the range 90-110°C, and the dye addition and dissolving time was about 50 minutes.

The oleic acid was then added gradually ensuring that proper wetting of the dye/resin mixture took place. The resulting mass of base material was then removed from the mixer, allowed to cool, and ground to a powder.

An ink was made by dissolving the resulting powder base material in a mixture of the ball pen ink solvents indicated above, to give an ink for filling into a ball pen.

EXAMPLE 2

A second ink formulation was made by forming a solid base material using the ingredients specified below, according to the procedure set out in Example 1, and the resulting solid material was converted into a ball pen ink by adding the solvents indicated below. The ink performs satisfactorily when introduced into a ball pen.

|                                      | Parts w/w |
| ------------------------------------ | --------- |
| **Base Material**                    |           |
| Styrene-allyl alcohol copolymer      | 800       |
| Alkyd Resin                          | 400       |
| Polyvinyl pyrrolidone                | 10        |
| Solvent Violet 8                     | 150       |
| Solvent Blue 38                      | 120       |
| Solvent Black 7                      | 10        |
| Oleic acid                           | 160       |
| **Solvent**                          |           |
| Benzyl alcohol                       | 590       |
| Dimethyl phthalate                   | 760       |

EXAMPLE 3

A base material for forming a black ink was made as described in Example 1, and converted into an ink by addition of solvent, the formulation for the base material and the formulation for the solvent being indicated below.

|                                      | Parts w/w |
| ------------------------------------ | --------- |
| **Base Material**                    |           |
| Styrene-allyl alcohol copolymer      | 750       |
| Alkyd resin                          | 350       |
| Polyvinyl pyrrolidone                | 10        |
| Solvent Black 5                      | 5         |
| Solvent Violet 8                     | 40        |
| Oleic acid                           | 110       |
| **Solvent**                          |           |
| Benzyl alcohol                       | 640       |
| Dimethyl phthalate                   | 820       |

EXAMPLE 4

A red ball pen ink was made using the formulation and conditions indicated in Example 1, but replacing the three indicated dyes by Solvent Red 69. Green and blue inks can be make similarly using solvent soluble dyes of appropriate colour.

EXAMPLE 5

A blue ball point pen ink formulation is as follows:

```
        Intermediary material

                                      Lbs.Wt


    Resin -R J100  ohol                960
          -Phtalopal LR 8525

    Solution PVP k90 (G.A.F.)
          - At 10% in Phenyl
            Gloycol (additive)          90

    Dye   -Victoria Pure Blue
          Bod Rxtra Conc.
```

8

```
Dye    -Blue Base K G                    210
       -Victoria Blue Base
        F4R                              210

       -Victoria Blue Base
        F.B.                              60
       -Methyl Violet

Oil    -CBase FN Fatty                    60
       -Nigrosine Base
        V(Oilsol Black N)
        Oil Fatty Acids

Oil    -Caster Oil Fatty
        Acids First Spilt
       -Vantal A1-30 Tall
        Oil Fatty Acids
       -Priolene 6910                    150

                                        1740
```

Solvent

```
Solvent-Benzyl Alcohol                   660
       -Phenyl Glycol                    300
-Dimethyl Phthalate                      300

                                        3000
```

**Claims**

1. A coloured composition for use in the manufacture of ball pen ink characterised by a solvent soluble dye dissolved or dispersed in a resin or a mixture of resins, the composition being in finely divided solid form.

2. A composition according to Claim 1 in the form of micronised powder.

3. A composition according to Claim 1, characterised in that the powder has a particle size of from 100 to 500 microns.

4. A composition according to any preceding Claim, characterised in that the dye is completely dissolved in a resin mixture comprising a major proportion of a neutral polar resin and a minor proportion of a resin containing free acid groups.

5. A composition according to Claim 4, characterised in that the resin containing free acid groups has an acid value in the range of 10 to 100.

6. A composition according to Claim 5, characterised in that the resin containing free acid groups have an acid value of about 80.

7. A composition according to any preceding Claim, further characterised by the presence of a resin containing basic groups.

8. A composition according to Claim 7, characterised in that the resin is polyvinyl pyrrolidine.

9

**9.** A composition according to any preceding Claim, further further characterised by the presence of a plasticiser.

**10.** A composition according to Claim 9, characterised in that the plasticiser is a fatty acid or a derivative thereof.

**11.** A composition according to Claim 10, characterised in that the plasticiser is a straight branched chain $C_4$-$C_{20}$ saturated or unsaturated organic acid.

**12.** A composition according to Claim 11, characterised in that the plasticiser is linoleic acid, linolenic acid, decanoic acid, ricinoleic acid, or castor oil.

**13.** A composition according to any preceding Claim further characterised by a stabilising agent.

**14.** A composition according to Claim 13, characterised in that the stabilising agent is an amino-alcohol.

**15.** A method for making a coloured composition as claimed in any of Claims 1 to 14 characterised by dissolving a solvent soluble dye in a resin or mixture of resins and allowing the mixture to solidify by cooling.

**16.** A method according to Claim 15, characterised in that the solvent soluble dye is dissolved in the resin at a temperature of above 70ºC for a period of 30 to 90 minutes.

**17.** A method according to Claim 16, characterised in that the solution step is carried out at 90 to 110ºC.

**18.** A method according to any of Claims 15 to 17, characterised by the further step of finely dividing the cooled solid.

**19.** A method of making ink for filling into ball pens characterised by dissolving a composition as claimed in any of Claims 1 to 14 or made by the method of any of Claims 15 to 18 in a solvent or mixture of solvents.

**20.** A ball pen filled with ink made by the method of Claim 19.

**21.** A method of making a ball pen ink characterised by the steps of adding a solvent soluble dye to a stirred resin or mixture of resins at a temperature at which the resins are flowable, maintaining the agitation while the resin or mixture of resins are at a relatively high temperature for a relatively brief period such that the dyes dissolve substantially without residue to give a solution of the dye in the resin, and adding solvents to the unfiltered dye-in-resin solution or to a solid derived therefrom to produce the ball pen ink.

**22.** A method of producing ink particularly ink for ball point pens characterised by melting a required quantity of resin material in a suitable receptacle, heating the molten resin to a temperature to reduce its viscosity to allow the mixing in of additives, adding to the molten resin at least one reative oil, and at least one dye, allowing the resultant solution to cool and solidify, crushing the resultant solid to fine particulate form and adding a required quantity of the particulate material to a given quantity of solvent.

**23.** A method of producing a powder intermediary for use in the production of inks characterised by melting a required quantity of resin material in a suitable receptacle, heating the molten resin to a temperature to reduce its viscosity to allow the mixing in of additives, adding to the molten resin at least one reactive oil and at least one dye, allowing the resultant solution to cool and solidify and crushing the resultant solid to fine particulate form.

**24.** A method as in Claim 23, characterised in that the resin is heated to a temperature in excess of 65º.

**25.** A method as in Claim 23 or Claim 24, characterised in that at least one thixotropic agent and/or shelf-life promoter is added to the resin material.

**26.** A powder intermediary when formed by the methods of any of Claims 23 to 25

FIGURE 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-9 117 222 (KITELANE LIMITED) <br> * claims 1,3,4,7-20,25 * | 1-23 | C09D11/18 |
| | | | |
| | | | TECHNICAL FIELDS SEARCHED (Int. Cl.5 ) |
| | | | C09D |

The present search report has been drawn up for all claims

| Place of search | Date of completion of the search | Examiner |
|---|---|---|
| THE HAGUE | 20 JANUARY 1993 | CATURLA VICENTE V. |